# EUROPEAN PATENT SPECIFICATION

(11) **EP 3 828 684 B1**
(45) Date of publication and mention of the grant of the patent: **24.04.2024**
(21) Application number: 19851070.3
(22) Date of filing: 01.07.2019
(51) Int. Cl.: G06F 3/0488, G06F 1/16, G06F 1/3231, G06F 1/3212

(54) **METHOD AND DEVICE FOR CONTROLLING SWITCHING OF PROXIMITY-EVENT DETECTION ELEMENTS**
VERFAHREN UND VORRICHTUNG ZUR STEUERUNG DES UMSCHALTENS VON ELEMENTEN ZUR ERKENNUNG VON NAHENDEN EREIGNISSEN
PROCÉDÉ ET DISPOSITIF POUR CONTROLER LA COMMUTATION D'ÉLÉMENTS DE DÉTECTION D'ÉVÉNEMENT DE PROXIMITÉ

(30) Priority: 22.08.2018 CN 201810961363
(43) Date of publication of application: 02.06.2021
(73) Proprietor: GUANGDONG OPPO MOBILE TELECOMMUNICATIONS CORP., LTD., Dongguan Guangdong 523860 (CN)
(72) Inventor: ZHENG, Canjie, Dongguan, Guangdong 523860 (CN); ZHANG, Qiang, Dongguan, Guangdong 523860 (CN); MO, Fei, Dongguan, Guangdong 523860 (CN); DAI, Cong, Dongguan, Guangdong 523860 (CN)
(74) Representative: Manitz Finsterwald Patent- und Rechtsanwaltspartnerschaft mbB
(86) International application number: PCT/CN2019/094200
(87) International publication number: WO 2020/038122

(56) References cited:
- CN-A- 103 929 538
- CN-A- 104 516 474
- CN-A- 106 873 879
- CN-A- 107 908 313
- CN-A- 107 943 345
- CN-A- 109 088 961
- CN-A- 109 271 019
- CN-A- 109 388 285
- CN-U- 203 311 399
- CN-U- 206 292 950
- US-A1- 2013 162 513

## Description

### TECHNICAL FIELD

This disclosure relates to the field of electronic technology, and more particularly to a method and device for controlling switching of proximity-event detection elements.

### BACKGROUND

With the progress of technology for manufacturing terminal devices, the terminal device can realize proximity-event recognition functions with proximity sensors. Therefore, upper applications of the terminal device can provide various function services based on proximity data. For example, game applications can provide a gesture-operation recognition function based on the proximity data.

US 2013/162513 A1 discloses a terminal device comprising a touch proximity sensor configured to disambiguate user actuations. The device is configured to switch operation of the touch proximity sensor from a low gain, high definition mode proximity sensor (including NxM touch sensors) to a high gain, low resolution mode proximity touch sensor (including nxm groups of touch sensor) when the terminal switches from a first state to a second state, wherein in the first state the terminal is directly visible to the user and in the second state the terminal is behind a barrier such as a piece of clothing, e.g. terminal in a pocket, so that the terminal is capable of detecting proximity events behind the barrier. The device further comprises one or more further proximity sensors, for e.g., infrared sensor, to detect, simultaneously with the touch proximity sensor, the state of the terminal device.

CN 107 943 345 A discloses a terminal comprising infrared proximity sensors disposed under the display screen of the terminal and to a method of calibrating the proximity sensor in order to prevent interference caused by the display screen when in the bright screen mode. The method includes : acquiring a first signal intensity value of a proximity sensor, where the first signal intensity value is a signal intensity value of the proximity sensor when a screen of the electronic device is in a screen-off state; acquiring a second signal intensity value of the proximity sensor, where the second signal intensity value is a signal intensity value of the proximity sensor when the screen of the electronic device is in a screen-on state; calculating a calibration value according to the first signal intensity value and the second signal intensity value; and calibrating the proximity sensor according to the calibration value.

### SUMMARY

The invention is set out in the appended set of claims.

Implementations of the disclosure may have the following advantageous effects.

According to the method provided herein, the instruction of switching the screen of the terminal device from the current first state to the second state is obtained. The first element corresponding to the first state is switched to the second element corresponding to the second state by invoking the pre-established switching thread, where the first element is configured to detect the screen proximity event in the first state and the second element is configured to detect the screen proximity event in the second state. The screen of the terminal device is switched from the first state to the second state when the switching success notification is obtained from the switching thread. With aid of the method, different elements are configured to collect proximity data when the screen is in different states, which improves the accuracy of the proximity data collected, and avoids the blocking of switching of the screen states caused by the delay of the switching of the elements for detecting the screen proximity events during switching of the screen states, thereby improving the smoothness of the switching of the screen states and improving the user experience.

Additional aspects and advantages of the implementations will be partially described in the following, and part of them will become obvious from the following description.

### BRIEF DESCRIPTION OF THE DRAWINGS

The described-above and/or additional aspects and advantages of the implementations will become apparent and be easily understood from the description of the implementations in conjunction with the following drawings.
FIG. 1 is a flow chart illustrating a method for controlling switching of proximity-event detection elements according to implementations.
FIG. 2 is a flow chart illustrating a method for controlling switching of proximity-event detection elements according to other implementations.
FIG. 3 is a flow chart illustrating a method for controlling switching of proximity-event detection elements according to yet other implementations.
FIG. 4-A is a schematic diagram illustrating a screen state switching process according to implementations.
FIG. 4-B is a schematic diagram illustrating a screen state switching process according to other implementations.
FIG. 5 is a schematic diagram illustrating a terminal device according to implementations.
FIG. 6 is a cross-sectional view of a terminal device according to implementations.
FIG. 7 is a cross-sectional view of a terminal device according to other implementations.
FIG. 8 is a schematic structural diagram illustrating a device for controlling switching of proximity-event detection elements according to implementations.
FIG. 9 is a schematic structural diagram illustrating a device for controlling switching of proximity-event detection elements according to other implementations.
FIG. 10 is a schematic structural diagram illustrating a device for controlling switching of proximity-event detection elements according to yet other implementations.

### DETAILED DESCRIPTION

The following describes implementations in detail. Examples of the implementations are illustrated in the accompanying drawings, where the same or like reference numerals represent the same or like elements or elements having the same or similar functions. The implementations described below with reference to the accompanying drawings are exemplary and are merely intended to explain the disclosure rather than limit the disclosure.

As mentioned in the above, since proximity data is generally collected by a fixed proximity sensor in the terminal device, it is difficult to adapt to varied collection conditions. For example, in a case that the fixed proximity sensor is an infrared sensor, when a screen is in a screen-on state, infrared light emitted by the infrared sensor may cause electrons in the screen to be excited so as to cause a light-transmittance display screen to flicker, thereby interfering with normal display of the light-transmittance display screen. As a result, functionality and quality of service provided by the terminal device may be affected. In addition, the electrons in the display screen and the infrared light are affected by each other, which may reduce accuracy of the proximity data collected.

To solve above-mentioned conflict between the fixed proximity sensor and the varied collection conditions, in the implementations of the disclosure, different elements for collecting proximity data are set according to different screen states, and therefore for each collection condition there is a corresponding element, which improves the accuracy of the proximity data collected.

In actual applications, applicant has known that when different elements (for collecting proximity data) are set for different screen states, during switching of the screen states, blocking of the switching of the screen states may occur due to the delay of switching of corresponding elements for detecting screen proximity events. Therefore, in implementations of the disclosure, an optimized method for switching the proximity-event detection elements is further provided to ensure smoothness of the switching of the screen states.

The following will describe the method for controlling switching of proximity-event detection elements of the implementations of the disclosure with reference to the accompanying drawings. The method is applicable to a terminal device including multiple proximity-event detection elements. The terminal device may be a mobile phone, a tablet computer, a personal digital assistant, a wearable device, or other hardware devices having a display screen. The wearable device may be a smart bracelet, a smart watch, smart glasses, or the like.

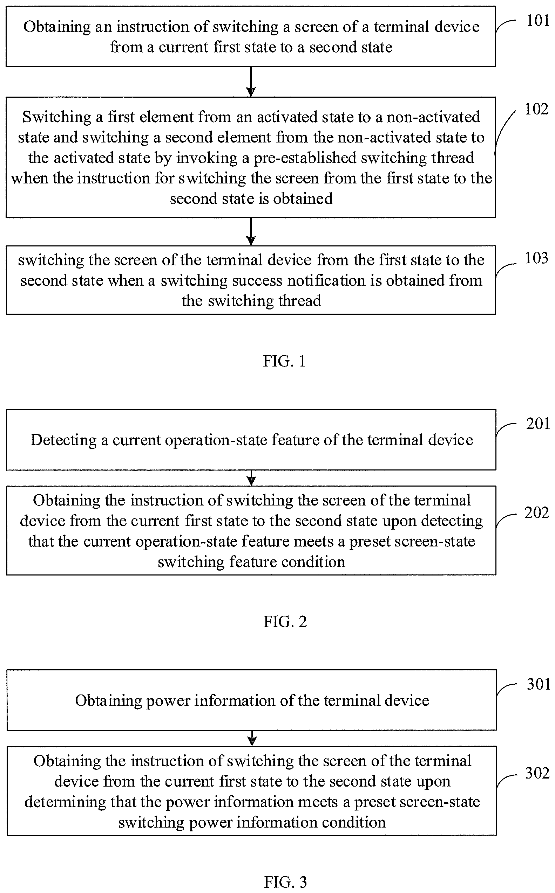

FIG. 1 is a flow chart illustrating a method for controlling switching of proximity-event detection elements according to implementations. As illustrated in FIG. 1, the method begins at 101.

At 101, an instruction of switching a screen of a terminal device from a current first state to a second state is obtained.

The first state and the second state of the screen respectively correspond to different states of the screen (i.e., screen states) of the terminal device. Proximity-data collection conditions are different in the first state and in the second state. According to the invention, the first state and the second state are respectively a screen-on state and a screen-off state, or the screen-off state and the screen-on state.

It should be noted that in different application scenarios, different manners are used to obtain the instruction of switching the screen of the terminal device from the current first state to the second state. Examples are as follows.

In an implementation, as illustrated in FIG. 2, the operation at 101 includes operations at 201 and 202.

At 201, a current operation-state feature of the terminal device is detected.

In one example, the current operation-state feature of the terminal device is used for assisting in determining in advance whether a user wants to switch the screen states. In different screen states, operation-state features to be determined are different. Examples are as follows.

As one example, if the current screen state is the screen-on state, a corresponding operation-state feature is used for assisting in determining whether to perform a screen-off operation, and thus the current operation-state feature includes a duration that no application runs in the foreground of the terminal device, a duration that no operation is performed on the screen of the terminal device, whether a corresponding screen-off button triggered by a user has been detected, or the like.

As another example, if the current screen state is the screen-off state, a corresponding operation-state feature is used for assisting in determining whether to light up the screen, and thus the current operation-state feature includes whether a start button of the terminal device is triggered, whether a screen-off gesture inputted by the user has been detected, or the like.

At 202, the instruction of switching the screen of the terminal device from the current first state to the second state is obtained when the current operation-state feature matches a preset screen-state switching feature.

It can be understood that different screen states correspond to different operation-state features (for assisting in determining whether to perform switching of the screen states), and accordingly correspond to different preset screen-state switching features. For example, as stated above, when the current screen state is the screen-on state, a corresponding preset screen-state switching feature is that the duration that no operation is performed on the screen of the terminal device reaches a preset duration (e.g., 2 minutes).

In one example, upon detecting that the current operation-state feature is the preset screen-state switching feature, it can be considered that the current user wants to switch the screen states, so that the screen of the terminal device can be switched from the current first state to the second state.

In another implementation, as illustrated in FIG. 3, the operation at 101 includes operations at 301 and 302.

At 301, power information of the terminal device is obtained.

In one example, "IntentFilter" and "BroadcastReceiver" are written, "registerReceiver (batteryReceiver, intentFilter)" is registered, wait for an onReceive callback and then parse "intent", so as to obtain the power information of the terminal device.

At 302, the instruction of switching the screen of the terminal device from the current first state to the second state is obtained when the power information matches preset screen-state switching power information.

It can be understood that the preset screen-state switching power information corresponds to the current screen state. For example, when the current screen state (i.e., the first state) is the screen-on state, the preset screen-state switching power information includes a relatively low power threshold. That is, when the current screen state is the screen-on state, if the power of the terminal device is less than the relatively low power threshold, the screen of the terminal device is switched from the screen-on state to the screen-off state to improve the endurance of the terminal device. In addition, in order not to affect the use, before the screen is switched from the screen-on state to the screen-off state (i.e., the second state), reminding information is popped up for reminding the user of whether to proceed to perform the switching of the screen states. Upon detecting that the switching of the screen states is rejected by the user, the switching of the screen states is skipped.

For another example, when the current screen state (i.e., the first state) is the screen-off state, the preset screen-state switching power information includes a relatively high power threshold, for example, five percent (5%) power. That is, when the current screen state is the screen-off state, if the power of the terminal device is greater than the relatively high power threshold, the screen of the terminal device is switched from the screen-off state to the screen-on state (i.e., the second state) to facilitate the use. It can be understood that for the convenience of the user, before switching the screen states according to the power information, authorization information of the user can also be obtained.

Therefore, based on the above examples, it can be known that the demand for switching of the screen states can be determined ahead of time, such that the switching of the detection elements (for detecting data) corresponding to the screen states can be performed ahead of time, thereby further ensuring smoothness of the switching of the screen states.

At 102, a pre-established switching thread is invoked to switch a first element corresponding to the first state to a second element corresponding to the second state, where the first element is configured to detect a screen proximity event in the first state and the second element is configured to detect a screen proximity event in the second state.

It can be understood that time consumed by switching from the first element (for detecting the screen proximity event in the first state) corresponding to the first state to the second element (for detecting the screen proximity event in the second state) corresponding to the second state may lead to blocking of the switching of the screen states. For example, when the screen is switched from the first state to the second state, since the switching from the first element to the second element has not been completed, the switching from the first state to the second state will be paused, which may affect efficiency of the switching of the screen states and thus affect the user experience.

In at least one implementation, it is further possible to coordinate network resources to a switching thread currently invoked to improve the processing efficiency of the switching thread, for example, network resources for an advertisement thread are released to be allocated to the network resources to the switching thread currently invoked.

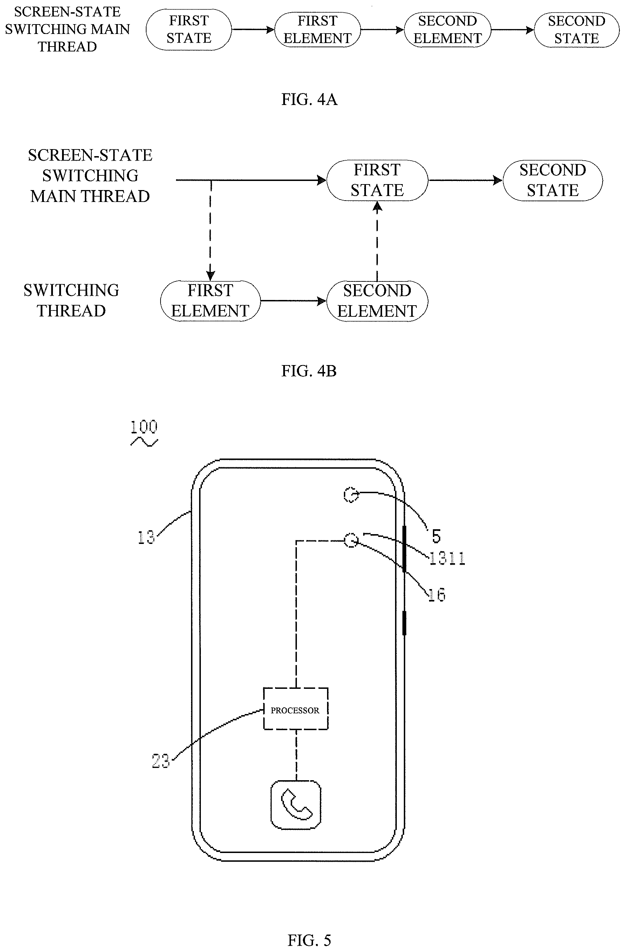

In order to smooth the switching of the screen states, in implementations of the disclosure, a switching thread is pre-established, where the switching thread is configured to control the switching from the first element to the second element. In one example, as illustrated in FIG. 4-A, if merely the switching from the first element to the second element is taken into account according to the instruction of switching the screen states, a screen-state switching main thread may perform switching from the first element to the second element in the first state. In this case, the screen is not switched to the second state until the switching from the first element to the second element is completed, which may cause the blocking of the switching of the screen states. In contrast, as illustrated in FIG. 4-B, the switching thread is pre-established. After the screen-state switching main thread obtains the instruction of switching the screen of the terminal device from the current first state to the second state, the pre-established switching thread is invoked to switch the first element corresponding to the first state to the second element corresponding to the second state, and thus by means of switching from the first element to the second element by the switching thread, a speed of element switching can be improved, and it can be ensured that the switching of the screen states is not blocked.

In at least one implementation, in order to ensure the stability of control of the switching of the proximity-event detection elements, the proximity-event detection element switching thread is marked as a thread that does not respond to asynchronous signals, that is, the switching thread cannot be interrupted.

At 103, the screen of the terminal device is switched from the first state to the second state when a switching success notification is obtained from the switching thread.

In one example, when the switching success notification is obtained from the switching thread, the screen of the terminal device is switched from the first state to the second state. That is, the switching from the first element to the second element has been completed when the screen of the terminal device is switched from the first state to the second state, thereby ensuring the smoothness of the switching of the screen states.

For better understanding of the method for controlling switching of the proximity-event detection elements in the implementations of the disclosure, the following will describe the implementations in conjunction with specific application scenarios. Examples are as follows.

### First application scenario

In the implementation, the first state is the screen-on state and the second state is the screen-off state, and accordingly the first element is a touch screen proximity sensor and the second element is an infrared proximity sensor.

As illustrated in FIG. 5 to FIG. 7, the terminal device 100 includes a touch screen 103, an infrared proximity sensor 16, a light sensor 5, and a processor 23. The touch screen 103 includes a display layer 13. The display layer 13 has a display region 1311. The infrared proximity sensor 16 is disposed below the display region 1311. The infrared proximity sensor 16 is configured to emit infrared light and receive infrared light reflected by an object to detect a distance between the object and the terminal device 100.

The following describes the mobile phone as an example of the terminal device 100. By setting the infrared proximity sensor 16 in the mobile phone to determine the distance between the mobile phone and an obstacle and making corresponding adjustments according to the distance, it is helpful to prevent accidental operations and save the power of the mobile phone. For example, when the user makes or answers a call and raises the mobile phone close to the head, the infrared proximity sensor 16 generates detection information by calculating a time length from a time point at which a transmitter emits infrared light to a time point at which a receiver receives reflected infrared light, and the processor 23 turns off the display layer 13 according to the detection information. Thereafter, when the mobile phone is far from the head, the processor 23 lights up the display layer 13 again according to detection information fed back by the infrared proximity sensor 16.

In one example, the display layer 13 is an organic light-emitting diode (OLED) display layer.

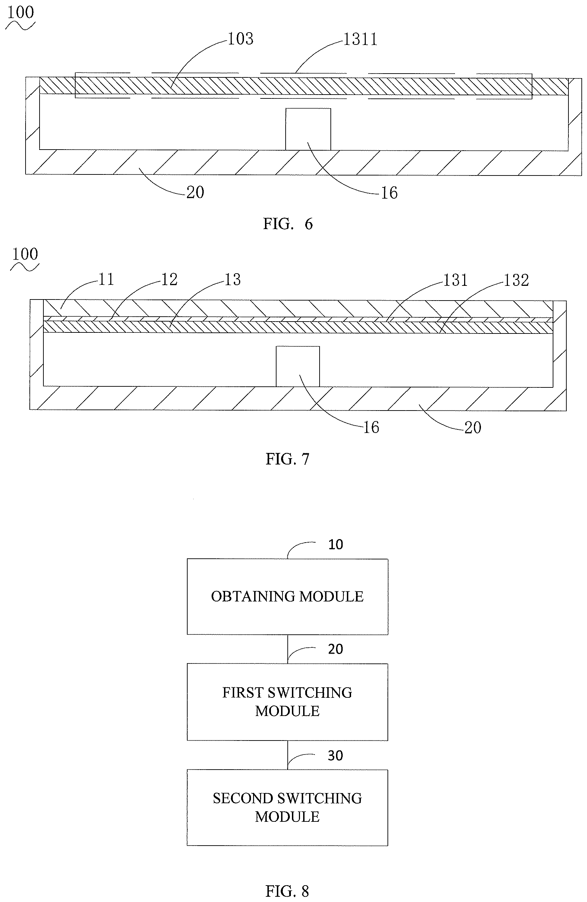

As illustrated in FIG. 7, in one example, the touch screen 103 further includes a light-transmission cover plate 11 and a touch layer 12. The light-transmission cover plate 11 is arranged on the touch layer 12. The touch layer 12 is arranged on the display layer 13, and an upper surface 131 of the display layer 13 faces the touch layer 12. A visible-light transmittance and an infrared-light transmittance of the light-transmission cover plate 11 and the touch layer 12 are both over 90%.

The touch layer 12 is mainly configured to receive proximity signal inputted by the user and transmit the proximity signal to a circuit board for data processing. That is, the touch layer 12 can support the touch screen to work as a touch screen proximity sensor, so as to obtain a certain position where the user touches the touch layer 12. It should be noted that the touch layer 12 being arranged on the display layer 13 refers to that the touch layer 12 is in contact with the display layer 13. For example, the touch layer 12 is attached to the display layer 13 by adopting In-Cell or On-Cell technology, and by attaching the touch layer 12 to the display layer 13, the weight of the display layer 13 and the overall thickness of the display layer 13 can be reduced. Alternatively, the touch layer 12 being arranged on the display layer 13 also means that the touch layer 12 is arranged above the display layer 13 and the touch layer 12 and the display layer 13 are spaced apart from each other.

In addition, the light-transmission cover plate 11 being arranged on the touch layer 12 can effectively protect the touch layer 12 and internal structures of the touch layer 12, and avoid damage to the touch layer 12 and the display layer 13 caused by external forces. The visible-light transmittance and the infrared-light transmittance of the light-transmission cover plate 11 and the touch layer 12 are both over 90%, which is not only beneficial to the display layer 13 to better display content, but also beneficial to the infrared proximity sensor 16 disposed below the display layer 13 to stably emit and receive infrared light, thereby ensuring the normal operation of the infrared proximity sensor 16.

According to the invention, the infrared proximity sensor 16 is configured to acquire proximity data when the screen is in the screen-off state, and the touch screen 103 is configured to acquire proximity data when the screen is in the screen-on state. Therefore, when the instruction of switching the screen states is obtained, the touch screen proximity sensor corresponding to the screen-on state is switched to the infrared proximity sensor corresponding to the screen-off state.

### First application scenario

In at least one implementation, the first state is the screen-off state and the second state is the screen-on state, and accordingly the first element is the infrared proximity sensor and the second element is the touch screen proximity sensor.

Referring back to FIG. 5 to FIG. 7, the terminal device includes the infrared proximity sensor and the touch screen having a proximity recognition function. The touch screen is used as a touch screen proximity sensor to recognize proximity events.

According to the invention, the infrared proximity sensor 16 is configured to acquire proximity data when the screen is in the screen-off state, and the touch screen 103 is configured to acquire proximity data when the screen is in the screen-on state. Therefore, when the instruction of switching the screen states is obtained, the infrared proximity sensor corresponding to the screen-off state is switched to the touch screen proximity sensor corresponding to the screen-on state.

According to the method for controlling switching of proximity-event detection elements, the instruction of switching the screen of the terminal device from the current first state to the second state is obtained. The first element corresponding to the first state is switched to the second element corresponding to the second state by invoking the pre-established switching thread, where the first element is configured to detect the screen proximity event in the first state and the second element is configured to detect the screen proximity event in the second state. The screen of the terminal device is switched from the first state to the second state when the switching success notification is obtained from the switching thread. With aid of the method, different elements are configured to collect the proximity data when the screen is in different states, which improves the accuracy of the proximity data collected, and avoids the blocking of switching of the screen states caused by the delay of the switching of the elements for detecting the screen proximity events during switching of the screen states, thereby improving the smoothness of the switching of the screen states and improving the user experience.

Implementations of the disclosure further provide a device for controlling switching of proximity-event detection elements. FIG. 8 is a schematic structural diagram illustrating a device for controlling switching of proximity-event detection elements according to implementations. As illustrated in FIG. 8, the device includes an obtaining module 10, a first switching module 20, and a second switching module 30.

The obtaining module 10 is configured to obtain an instruction of switching a screen of a terminal device from a current first state to a second state.

The first switching module 20 is configured to switch a first element corresponding to the first state to a second element corresponding to the second state by invoking a pre-established switching thread, where the first element is configured to detect a screen proximity event in the first state and the second element is configured to detect a screen proximity event in the second state.

The second switching module 30 is configured to switch the screen of the terminal device from the first state to the second state when a switching success notification is obtained from the switching thread.

In at least one implementation, in terms of switching the first element corresponding to the first state to the second element corresponding to the second state, the first switching module 20 is configured to: switch a touch screen proximity sensor corresponding to a screen-on state to an infrared proximity sensor corresponding to a screen-off state when the first state is the screen-on state and the second state is the screen-off state; or switch the infrared proximity sensor corresponding to the screen-off state to the touch screen proximity sensor corresponding to the screen-on state when the first state is the screen-off state and the second state is the screen-on state.

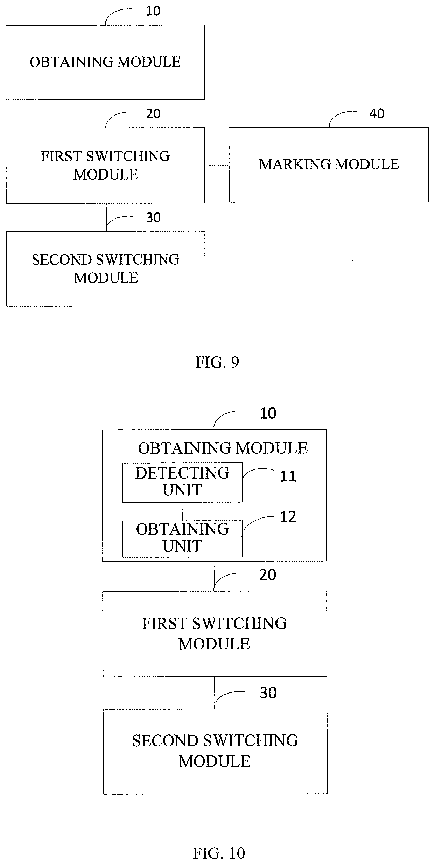

In at least one implementation, as illustrated in FIG. 9, based on FIG. 8, the device further includes a marking module 40. The marking module 40 is configured to mark the pre-established proximity-event detection element switching thread as a thread that does not respond to asynchronous signals.

In at least one implementation, as illustrated in FIG. 10, based on FIG. 8, the obtaining module 10 further includes a detecting unit 11 and a detecting unit 12.

The detecting unit 11 is configured to detect a current operation-state feature of the terminal device.

The obtaining unit 12 is configured to obtain the instruction of switching the screen of the terminal device from the current first state to the second state upon detecting that the current operation-state feature is a preset screen-state switching feature.

In another implementation, the detecting unit 11 is configured to obtain power information of the terminal device, and the obtaining unit 12 is configured to obtain the instruction of switching the screen of the terminal device from the current first state to the second state upon determining that the power information matches preset screen-state switching power information.

In at least one implementation, in terms of obtaining the instruction of switching the screen of the terminal device from the current first state to the second state, the obtaining unit 12 is configured to: obtain the instruction of switching the screen of the terminal device from a screen-on state to a screen-off state when the first state is the screen-on state and the power information is less than the preset screen-state switching power information.

In another implementation, in terms of obtaining the instruction of switching the screen of the terminal device from the current first state to the second state, the obtaining unit 12 is configured to: obtain the instruction of switching the screen of the terminal device from a screen-off state to a screen-on state when the first state is the screen-off state and the power information is greater than the preset screen-state switching power information.

In at least one implementation, the device further includes a coordinating module. The coordinating module is configured to coordinate network resources to the pre-established switching thread currently invoked.

It should be noted that the explanation of the method for controlling switching of proximity-event detection elements in the foregoing implementations is also applicable to the device for controlling switching of proximity-event detection elements, and details are not described herein again.

According to the device for controlling switching of proximity-event detection elements, the instruction of switching the screen of the terminal device from the current first state to the second state is obtained. The first element corresponding to the first state is switched to the second element corresponding to the second state by invoking the pre-established switching thread, where the first element is configured to detect the screen proximity event in the first state and the second element is configured to detect the screen proximity event in the second state. The screen of the terminal device is switched from the first state to the second state when the switching success notification is obtained from the switching thread. With aid of the method, different elements are configured to collect the proximity data when the screen is in different states, which improves the accuracy of the proximity data collected, and avoids the blocking of switching of the screen states caused by the delay of the switching of the elements for detecting the screen proximity events during switching of the screen states, thereby improving the smoothness of the switching of the screen states and improving the user experience.

Implementations of the disclosure further provide a terminal device. The terminal device includes a processor, a memory, and computer programs stored in the memory and executable on the processor. The computer programs, when executed by the processor, are operable with the processor to perform the method for controlling switching of proximity-event detection elements described above.

Implementations of the disclosure further provide a computer readable storage medium storing computer programs. The computer programs, when executed by a processor, are operable with the processor to perform the method controlling switching of proximity-event detection elements described above.

The reference term "an implementation", "some implementations", "implementation", "specific implementation", or "some implementations" referred to herein means that a particular feature, structure, material, or characteristic described in conjunction with the implementation or implementation may be contained in at least one implementation or implementation of the present disclosure. The phrase appearing in various places in the specification does not necessarily refer to the same implementation or implementation. The particular feature, structure, material, or characteristic described may be properly combined in any one or more implementations or implementations. In addition, when the implementation or implementation is not mutually exclusive with other implementations or implementations, it is expressly and implicitly understood by those skilled in the art that an implementation described herein may be combined with other implementations or implementations.

In addition, terms "first", "second", and the like are only used for description and cannot be understood as explicitly or implicitly indicating relative importance or implicitly indicating the number of technical features referred to herein. Therefore, features restricted by terms "first", "second", and the like can explicitly or implicitly include at least one of the features. In the context of the disclosure, unless stated otherwise, "multiple" refers to "at least two", such as two, three, and the like.

Any process or method illustrated in a flow chart or herein in other manners can be understood as a module, a fragment, or a portion of codes that include one or more executable instructions for implementing a particular logical function or operations of a process. The scope of the implementations includes additional implementations in which the functions may be performed out of the order illustrated or discussed. For example, the functions can be performed in a substantially simultaneous manner or in the reverse order according to the functions involved, which should be understood by those skilled in the art.

Logics and/or steps illustrated in the flow charts or described herein in other ways, can be considered as a sequencing table of executable instructions for realizing logical functions, which can be embodied in any computer readable medium to be used by an instruction execution system, a device, or an apparatus (e.g., a computer-based system, a system including a processing module, or other systems that can extract an instruction which is obtained from the instruction execution system, device, or apparatus), or to be used in combination with the instruction execution system, device, or apparatus. In terms of this specification, the "computer readable medium" may be any device that includes or stores communicating programs, propagation or transmission programs used by the instruction execution system, device, or apparatus or can be used in combination with the instruction execution system, device or, apparatus. In particular, the computer readable medium (illustrated in a non-exhaustive list) may include: an electrical connection part (control method) having one or more wires, a portable computer disk cartridge (magnetic device), a random access memory (RAM), a read-only memory (ROM), an erasable programmable read-only memory (EPROM or flash memory), an optical fiber device, and a portable compact disc read-only memory (CDROM). In addition, the computer readable medium even can be paper or other appropriate medium on which the programs are printed, where the programs can be electronically obtained as follows. An optical scanning is conducted on the paper or other medium, followed by editing, interpreting, or processing in other appropriate mode. The programs are stored in a computer memory.

It should be understood that all parts of the implementations can be realized via hardware, software, firmware, or a combination thereof. In the above implementations, multiple operations or methods can be implemented by software or firmware that is stored in a memory and executed by a proper instruction execution system. For example, if the multiple operations or methods are implemented by hardware, as in another implementation, the multiple operations or methods can be implemented with any of the following technologies or a combination thereof known in the art: a discrete logic circuit with a logic gate circuit for realizing logic functions on data signals, a dedicated integrated circuit with an appropriate combined logic gate circuit, a programmable gate array (PGA), a field programmable gate array (FPGA), and so on.

It should be understood by those of ordinary skill in the art that all or part of operations of the method of the above implementations can be implemented by instructing relevant hardware via a program, the program can be stored in a computer-readable storage medium, and when the program is executed, one of operations or a combination of the operations of the method implementations is executed.

Moreover, the functional units in the implementations may be integrated in one processing module, or the units separately and physically exist, or two or more units are integrated in one module. The above-mentioned integrated module may be realized in the form of hardware or a software functional module. When the integrated module is realized in the form of a software functional module and sold or used as an independent product, it can also be stored in a computer-readable storage medium.

The aforementioned storage medium may be an ROM, a magnetic disc, or an optical disc, or the like.

Although some implementations are illustrated and described above, it should be understood that the implementations are exemplary rather than limiting the present disclosure. Various changes, modifications, substitutions, and variations could be made to the implementations by those of ordinary skilled in the art within the scope of the appended claims.

## Claims

1. A method for controlling switching of proximity-event detection elements, being performed by a terminal device (100) comprising a touch screen (103) configured to work as a touch screen proximity sensor, and an infrared proximity sensor (16), the method comprising:
obtaining (101) an instruction of switching the screen of the terminal device from a current first state to a second state, wherein the first state and the second state are respectively a screen-on state and a screen-off state, or respectively the screen-off state and the screen-on state;
invoking (102) a pre-established switching thread to switch from the touch screen proximity sensor corresponding to the screen-on state to the infrared proximity sensor corresponding to the screen-off state when the first state is the screen-on state and the second state is the screen-off state, and to switch from the infrared proximity sensor corresponding to the screen-off state to the touch screen proximity sensor corresponding to the screen-on state when the current first state is the screen-off state and the second state is the screen-on state, so that the infrared proximity sensor is configured to detect a screen proximity event when the screen is in the screen-off state, and the touch screen proximity sensor is configured to detect a screen proximity event when the screen is in the screen-on state; and
switching (103) the screen of the terminal device from the first state to the second state, in response to obtaining a switching success notification from the switching thread.

2. The method of claim 1, comprising:
prior to invoking the pre-established switching thread,
marking the pre-established switching thread as a thread that is unable to be interrupted.

3. The method of claim 1 or 2, further comprising:
prior to obtaining the instruction of switching the screen of the terminal device from the current first state to the second state, detecting (201) a current operation-state feature of the terminal device, wherein the operation-state feature is used for determining whether to switch from the screen-on state to the screen-off state or from the screen-off state to the screen-on state; and
generating the instruction of switching the screen of the terminal device from the current first state to the second state in response to detecting that the current operation-state feature is a preset screen-state switching feature, wherein different operation-state features correspond to different preset screen-state switching features.

4. The method of claim 1 or 2, further comprising:
prior to obtaining the instruction of switching the screen of the terminal device from the current first state to the second state,
obtaining (301) power information of the terminal device, wherein the power information is indicative of a power of the terminal device; and
generating the instruction of switching the screen of the terminal device from the current first state to the second state in response to determining that the power information matches preset screen-state switching power information, wherein
generating the instruction of switching the screen of the terminal device from the current first state to the second state in response to determining that the power information matches the preset screen-state switching power information comprises one of:
generating the instruction of switching the screen of the terminal device from a screen-on state to a screen-off state in condition of the first state being the screen-on state in response to the power being less than a low power threshold comprised in the preset screen-state switching power information; or
generating the instruction of switching the screen of the terminal device from a screen-off state to a screen-on state in condition of the first state being the screen-off in response to the power being greater than a high power threshold comprised in the preset screen-state switching power information.

5. A terminal device (100) comprising:
an infrared proximity sensor (16);
a touch screen (103) configured to work as a touch screen proximity sensor;
a power source;
a processor (23);
a memory; and
computer programs stored in the memory and executable on the processor, wherein the computer programs, when executed by the processor, are operable with the processor to perform the method of any of claims 1 to 4.

6. A computer readable storage medium storing computer programs, wherein the computer programs, when executed by a processor of a terminal device according to claim 5, are operable with the processor to:
perform the method of any of claims 1 to 4.

## Patentansprüche

1. Verfahren zur Steuerung des Umschaltens von Elementen zur Erkennung von nahenden Ereignissen, das von einem Endgerät (100) durchgeführt wird, das einen Touchscreen (103), der konfiguriert ist, um als Touchscreen-Näherungssensor zu arbeiten, und einen Infrarot-Näherungssensor (16) umfasst, das Verfahren umfassend:
Erhalten (101) einer Anweisung zum Umschalten des Bildschirms des Endgeräts von einem aktuellen ersten Zustand in einen zweiten Zustand, wobei der erste Zustand und der zweite Zustand jeweils ein eingeschalteter Bildschirmzustand und ein ausgeschalteter Bildschirmzustand bzw. ein ausgeschalteter Bildschirmzustand und ein eingeschalteter Bildschirmzustand sind;
Aufrufen (102) eines vorher festgelegten Umschalt-Threads, um von dem Touchscreen-Näherungssensor, der dem eingeschalteten Bildschirmzustand entspricht, auf den Infrarot-Näherungssensor umzuschalten, der dem ausgeschalteten Bildschirmzustand entspricht, wenn der erste Zustand der eingeschaltete Bildschirmzustand und der zweite Zustand der ausgeschaltete Bildschirmzustand ist, und von dem Infrarot-Näherungssensor, der dem ausgeschalteten Bildschirmzustand entspricht, auf den Touchscreen-Näherungssensor umzuschalten, der dem eingeschalteten Bildschirmzustand entspricht, wenn der aktuelle erste Zustand der ausgeschaltete Bildschirmzustand ist und der zweite Zustand der eingeschaltete Bildschirmzustand ist, sodass der Infrarot-Näherungssensor konfiguriert ist, um ein Bildschirm-Näherungsereignis zu erkennen, wenn sich der Bildschirm im ausgeschalteten Zustand befindet, und der Touchscreen-Näherungssensor konfiguriert ist, um ein Bildschirm-Näherungsereignis zu erkennen, wenn der Bildschirm sich im eingeschalteten Bildschirmzustand befindet; und
Umschalten (103) des Bildschirms des Endgeräts von dem ersten Zustand in den zweiten Zustand in Reaktion auf das Erhalten einer Umschalterfolgsbenachrichtigung von dem Umschalt-Thread.

2. Verfahren nach Anspruch 1, umfassend:
vor dem Aufrufen des vorher festgelegten Umschalt-Threads,
Markieren des vorher festgelegten Umschalt-Threads als Thread, der nicht unterbrochen werden kann.

3. Verfahren nach Anspruch 1 oder 2, ferner umfassend:
vor dem Erhalten der Anweisung zum Umschalten des Bildschirms des Endgeräts von dem aktuellen ersten Zustand in den zweiten Zustand,
Erkennen (201) eines aktuellen Betriebszustandsmerkmals des Endgeräts, wobei das Betriebszustandsmerkmal verwendet wird, um zu bestimmen, ob vom eingeschalteten Bildschirmzustand in den ausgeschalteten Bildschirmzustand oder vom ausgeschalteten Bildschirmzustand in den eingeschalteten Bildschirmzustand umgeschaltet werden soll; und
Erzeugen der Anweisung zum Umschalten des Bildschirms des Endgeräts von dem aktuellen ersten Zustand in den zweiten Zustand in Reaktion auf das Erkennen, dass das aktuelle Betriebszustandsmerkmal ein voreingestelltes Bildschirmzustandsumschaltmerkmal ist, wobei verschiedene Betriebszustandsmerkmale verschiedenen voreingestellten Bildschirmzustandsumschaltmerkmalen entsprechen.

4. Verfahren nach Anspruch 1 oder 2, ferner umfassend:
vor dem Erhalten der Anweisung zum Umschalten des Bildschirms des Endgeräts von dem aktuellen ersten Zustand in den zweiten Zustand,
Erhalten (301) einer Leistungsinformation des Endgeräts, wobei die Leistungsinformation eine Leistung des Endgeräts angibt; und
Erzeugen der Anweisung zum Umschalten des Bildschirms des Endgeräts von dem aktuellen ersten Zustand in den zweiten Zustand in Reaktion auf das Bestimmen, dass die Leistungsinformation mit der voreingestellten Bildschirmzustandsleistungsinformation übereinstimmt,
wobei das Erzeugen der Anweisung zum Umschalten des Bildschirms des Endgeräts von dem aktuellen ersten Zustand in den zweiten Zustand in Reaktion auf das Bestimmen, dass die Leistungsinformation mit der voreingestellten Bildschirmzustandsleistungsinformation übereinstimmt, eines der Folgenden umfasst:
Erzeugen der Anweisung zum Umschalten des Bildschirms des Endgeräts von einem eingeschalteten Bildschirmzustand in einen ausgeschalteten Bildschirmzustand abhängig davon, dass der erste Zustand der eingeschaltete Bildschirmzustand ist, in Reaktion darauf, dass die Leistung kleiner als ein niedriger Leistungsschwellenwert ist, der in der voreingestellten Bildschirmzustandsleistungsinformation enthalten ist; oder
Erzeugen der Anweisung zum Umschalten des Bildschirms des Endgeräts von einem ausgeschalteten Bildschirmzustand in einen eingeschalteten Bildschirmzustand abhängig davon, dass der erste Zustand der ausgeschaltete Bildschirmzustand ist, in Reaktion darauf, dass die Leistung größer als ein hoher Leistungsschwellenwert ist, der in der voreingestellten Bildschirmzustandsleistungsinformation enthalten ist.

5. Endgerät (100), umfassend:
einen Infrarot-Näherungssensor (16);
einen Touchscreen (103), der konfiguriert ist, um als Touchscreen-Näherungssensor zu arbeiten;
eine Stromquelle;
einen Prozessor (23);
einen Speicher; und
Computerprogramme, die in dem Speicher gespeichert und auf dem Prozessor ausführbar sind, wobei die Computerprogramme bei Ausführung durch den Prozessor mit dem Prozessor betreibbar sind, um das Verfahren nach einem der Ansprüche 1 bis 4 durchzuführen.

6. Computerlesbares Speichermedium, auf dem Computerprogramme gespeichert sind, wobei die Computerprogramme bei Ausführung durch einen Prozessor eines Endgeräts nach Anspruch 5 mit dem Prozessor betreibbar sind, um:
das Verfahren nach einem der Ansprüche 1 bis 4 durchzuführen.

## Revendications

1. Procédé de commande de commutation d'éléments de détection d'événements de proximité, réalisé par un dispositif terminal (100) comprenant un écran tactile (103) configuré pour faire office de capteur de proximité d'écran tactile, et un capteur de proximité infrarouge (16), le procédé comprenant :
l'obtention (101) d'une instruction de commutation de l'écran du dispositif terminal d'un premier état actuel sur un second état, dans lequel le premier état et le second état sont respectivement un état d'écran allumé et un état d'écran éteint, ou respectivement l'état d'écran éteint et l'état d'écran allumé ;
l'appel (102) d'un fil d'exécution de commutation préétabli pour commuter le capteur de proximité d'écran tactile correspondant à l'état d'écran allumé sur le capteur de proximité infrarouge correspondant à l'état d'écran éteint, ou commuter le capteur de proximité infrarouge correspondant à l'état d'écran éteint sur le capteur de proximité d'écran tactile correspondant à l'état d'écran allumé lorsque le premier état actuel est l'état d'écran éteint et le second état est l'état d'écran allumé, de telle sorte que le capteur de proximité infrarouge soit configuré pour détecter un événement de proximité d'écran lorsque l'écran est dans l'état d'écran éteint, et le capteur de proximité d'écran tactile soit configuré pour détecter un événement de proximité d'écran lorsque l'écran est dans l'état d'écran allumé ; et
la commutation (103) de l'écran du terminal du dispositif terminal du premier état sur le second état, en réponse à l'obtention d'une notification de réussite de commutation à partir du fil d'exécution de commutation.

2. Procédé selon la revendication 1, comprenant :
avant l'appel du fil d'exécution de commutation préétabli,
le marquage du fil d'exécution de commutation préétabli en tant que fil d'exécution non interruptible.

3. Procédé selon la revendication 1 ou 2, comprenant en outre :
avant l'obtention de l'instruction de commutation de l'écran du dispositif terminal du premier état actuel sur le second état,
la détection (201) d'une caractéristique d'état de fonctionnement actuel du dispositif terminal, dans lequel la caractéristique d'état de fonctionnement sert à déterminer qu'il convient ou non de commuter l'état d'écran allumé sur l'état d'écran éteint ou l'état d'écran éteint sur l'état d'écran allumé ; et
la génération de l'instruction de commutation de l'écran du dispositif terminal du premier état actuel sur le second état en réponse à la détection que la caractéristique d'état de fonctionnement actuelle est une caractéristique de commutation d'état d'écran préétablie, dans lequel différentes caractéristiques d'état de fonctionnement correspondent à différentes caractéristiques de commutation d'état d'écran préétablies.

4. Procédé selon la revendication 1 ou 2, comprenant en outre :
avant l'obtention de l'instruction de commutation de l'écran du dispositif terminal du premier état actuel sur le second état,
l'obtention (301) d'informations de puissance du dispositif terminal, dans lequel les informations de puissance indiquent une puissance du dispositif terminal ; et
la génération de l'instruction de commutation de l'écran du dispositif terminal du premier état actuel sur le second état en réponse à la détermination que les informations de puissance correspondent à des informations de puissance de commutation d'état d'écran préétablies, dans lequel
la génération de l'instruction de commutation de l'écran du dispositif terminal du premier état actuel sur le second état en réponse à la détermination que les informations de puissance correspondent aux informations de puissance de commutation d'état d'écran préétablies comprend :
la génération de l'instruction de commutation de l'écran du dispositif terminal d'un état d'écran allumé sur un état d'écran éteint à condition que le premier état soit l'état d'écran allumé en réponse à une puissance inférieure à un seuil de puissance faible compris dans les informations de puissance de commutation d'état d'écran préétablies ; ou
la génération de l'instruction de commutation de l'écran du dispositif terminal d'un état d'écran éteint sur un état d'écran allumé à condition que le premier état soit l'écran éteint en réponse à une puissance supérieure à un seuil de puissance élevé compris dans les informations de puissance de commutation d'état d'écran préétablies.

5. Dispositif terminal (100) comprenant :
un capteur de proximité infrarouge (16) ;
un écran tactile (103) configuré pour faire office de capteur de proximité d'écran tactile ;
une source de puissance ;
un processeur (23) ;
une mémoire ; et
des programmes d'ordinateur stockés dans la mémoire et exécutables sur le processeur, dans lequel les programmes d'ordinateur, à leur exécution par le processeur, sont exploitables avec le processeur pour réaliser le procédé selon l'une quelconque des revendications 1 à 4.

6. Support de stockage lisible par ordinateur stockant des programmes d'ordinateur, dans lequel les programmes d'ordinateur, à leur exécution par un processeur d'un dispositif terminal selon la revendication 5, sont exploitables avec le processeur pour :
réaliser le procédé selon l'une quelconque des revendications 1 à 4.
